# EUROPEAN PATENT APPLICATION

(11) **EP 4 729 915 A1**
(43) Date of publication of application: **22.04.2026**
(21) Application number: 25209898.3
(22) Date of filing: 20.10.2025
(51) Int. Cl.: G01M 15/14, F01D 21/00, G01N 21/15, G02B 27/00, G01N 21/85, G02B 23/24

(54) **LOCAL GAS PATH DRIVEN PASSIVE PURGE FOR OPTICAL PROBE**

(30) Priority: 18.10.2024 US 202418920170
(71) Applicant: RTX Corporation, Farmington, CT 06032 (US)
(72) Inventor: HACKETT, Bryan J., Berlin, 06037 (US); WARREN, Eli, Bend, 97703-8475 (US)
(74) Representative: Dehns

(57) **Abstract**

An apparatus, comprising an optical probe (102) having optical components therein. A gas path router (104) receives an airflow from a gas path (106) of a gas turbine engine. The gas path router (104) is configured to route the airflow from the gas path (106) past the optical components of the optical probe (102) to purge debris from the optical components.

## Description

### TECHNICAL FIELD

This disclosure relates generally to optical probes. More specifically, this disclosure relates to a manner for cleaning the optics of an optical probe.

### BACKGROUND

Nearly all optical probes in gas turbine engines have a need to keep the optics clean from debris in the engine. The optics can comprise fibers, lenses, mirrors, etc. for probes. In high-temperature environments that require cooling, the cooling fluid, typically gaseous nitrogen coolant (GN2), can be directed to keep the optics clean. Probes in lower temperature environments that do not require cooling require some sort of purge to keep the optics clean. Typically, these probe designs include similar cooling passages that carry a purge fluid, often just clean, dry shop air, making the designs just as complex as the high-temperature cooled probes. In addition to the design complexity, there is still a need for the purge supply from the test cell. Alternative designs eliminate the purge/cooling altogether thereby simplifying the probe design. However, these designs require periodic cleaning of the optics. This is typically achieved by removing the probe from outside of the case which requires probe access that is not necessarily available for all probes.

### SUMMARY

This disclosure relates to a use of local gas-path flow to clean optics of an optical sensor.

In one aspect of the invention, an apparatus includes an optical probe (e.g., a beam interrupt optical probe) having optical components therein and a gas path router for receiving an airflow from a gas path of a gas turbine engine, where the gas path router is configured to route the airflow from the gas path past the optical components of the optical probe to purge debris from the optical components.

Any single one or any combination of the following features may be used with the aspect or embodiments above or herein.

In any of the aspects or embodiments described above or herein, the optical probe may include a beam interrupt optical probe. In any of the aspects or embodiments described above or herein, the gas path router further may include a housing of the optical probe defining a first opening for receiving a first portion of the airflow from the gas path and a second opening for exiting (releasing or discharging) the first portion of the airflow and a mirror configured for insertion into the housing, the mirror defining a face for reflecting an optical signal toward an optical sensor of the optical probe such that when the mirror is inserted into the housing a chamber is defined between the first opening and the second opening of the housing, the mirror further defining a mirror chamber therein for receiving a second portion of the airflow from the gas path, the mirror further defining a plurality of passageways in the face of the mirror connecting the mirror chamber to the chamber between the first opening and the second opening within the housing of the optical probe. In any of the aspects or embodiments described above or herein, air exiting (released or discharged from) the plurality of passageways in the face of the mirror may further provide an air curtain to protect the face of the mirror from the first portion of the airflow within the housing (the plurality of passageways in the face of the mirror may be configured to provide an air curtain with air discharged therethrough to protect the face of the mirror from the first portion of the airflow within the housing). In any of the aspects or embodiments described above or herein, the second opening may be larger than the first opening (e.g., larger in a respective cross-sectional area). In any of the aspects or embodiments described above or herein, the mirror chamber may comprise an input opening larger than the plurality of passageways (e.g., larger in a cross-sectional area than a total cross-sectional area of the plurality of passageways). In any of the aspects or embodiments described above or herein, (the apparatus may be configured to provide) a pressure to or within the chamber between the first opening and the second opening within the housing may be lower than a pressure provided to or within the mirror chamber causing the airflow to flow out of the plurality of passageways in the face of the mirror and create an air curtain to protect the face of the mirror (when in use). In any of the aspects or embodiments described above or herein, the gas path router further may include: a housing of the optical probe defining a first substantially straight passageway having a first end for receiving the airflow from the gas path and a second end for exiting (releasing or discharging) a first portion of the airflow, the housing of the optical probe further defining a second substantially straight passageway having a first end connected to the first substantially straight passageway for receiving a second portion of the airflow, the housing of the optical probe further defining an outlet passage for routing the second portion of the airflow past the optical components of the optical probe to purge debris from the optical component. In any of the aspects or embodiments described above or herein, the first portion of the airflow may be greater than the second portion of the airflow such that the debris within the airflow remains substantially within the first substantially straight passageway when flowing past the second substantially straight passageway. In any of the aspects or embodiments described above or herein, the gas path router further may include a housing of the optical probe defining a first curved passageway having a first end for receiving the airflow from the gas path and a second end for exiting (releasing or discharging) a first portion of the airflow, the housing of the optical probe further defining a second curved passageway having a first end connected to the first curved passageway for receiving a second portion of the airflow, the housing of the optical probe further defining an outlet passage for routing the second portion of the airflow past the optical component of the optical probe to purge debris from the optical component. In any of the aspects or embodiments described above or herein, movement of the airflow through the first curved passageway creates centrifugal forces on the debris within the airflow to move the debris towards an outer edge of the airflow such that substantially all of the debris remains within the second portion of the airflow (when in use).

In another aspect of the invention, an apparatus includes an optical probe (e.g., a beam interrupt optical probe) having optical components therein. The apparatus also includes a housing surrounding the optical probe defining a first opening for receiving a first portion of airflow from a gas path and a second opening for exiting (releasing or discharging) the first portion of the airflow. The apparatus also includes a mirror configured for insertion into the housing, the mirror defining a face for reflecting an optical signal toward an optical sensor of the optical probe such that when the mirror is inserted into the housing a chamber is defined between the first opening and the second opening of the housing, the mirror further defining a mirror chamber therein for receiving a second portion of the airflow from the gas path, the mirror further defining a plurality of passageways in the face of the mirror connecting the mirror chamber to the chamber between the first opening and the second opening within the housing of the optical probe.

Any single one or any combination of the following features may be used with the aspects or embodiments above or herein.
In any of the aspects or embodiments described above or herein, the second opening may be larger than the first opening. In any of the aspects or embodiments described above or herein, the mirror chamber may have an input opening larger than the plurality of passageways (e.g., larger in a cross-sectional area than a total cross-sectional area of the plurality of passageways). In any of the aspects or embodiments described above or herein, a pressure within the chamber between the first opening and the second opening within the housing may be lower than the pressure within the mirror chamber causing the airflow to flow out of the plurality of passageways in the face of the mirror and create an air curtain to protect the face of the mirror (when in use).

In another aspect of the invention, an apparatus includes an optical probe having optical components therein and a housing surrounding the optical probe defining a first passageway having a first end for receiving an airflow from a gas path and a second end for exiting (releasing or discharging) a first portion of the airflow, the housing of the optical probe further defining a second passageway having a first end connected to the first passageway for receiving a second portion of the airflow, the housing of the optical probe further defining an outlet passage for routing the second portion of the airflow past the optical component of the optical probe to purge debris from the optical component.

Any single one or any combination of the following features may be used with the aspects or embodiments above or herein.
In any of the aspects or embodiments described above or herein, the first passageway may include a first substantially straight passageway and the second passageway may include a second substantially straight passageway. In any of the aspects or embodiments described above or herein, the first portion of the airflow may be greater than the second portion of the airflow (when in use) such that the debris within the airflow remains substantially within the first substantially straight passageway when flowing past the second substantially straight passageway. In any of the aspects or embodiments described above or herein, the first passageway may include a first curved passageway and the second passageway may include a second curved passageway. In any of the aspects or embodiments described above or herein, movement of the airflow through the first curved passageway creates centrifugal forces on the debris within the airflow to move the debris towards an outer edge of the airflow such that substantially all of the debris remains within the second portion of the airflow (when in use).

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
FIGURE 1 illustrates a block diagram of a system for using gas path flow to clean optics of an optical probe in accordance with this disclosure;
FIGURE 2 illustrates a cross-sectional view of a beam interrupt probe using gas path flow to clear a mirror surface in accordance with this disclosure;
FIGURE 3 illustrates a perspective view of the mirror of the beam interrupted probe of FIGURE 2 in accordance with this disclosure;
FIGURE 4 illustrates a schematic view of an example optical inspection system in accordance with this disclosure;
FIGURE 5 illustrates a perspective view of an example probe body of the optical inspection system of FIGURE 4 in accordance with this disclosure;
FIGURE 6 illustrates another perspective view of an example probe body including gas path outlets in accordance with this disclosure;
FIGURE 7 illustrates a one example of a gas path routing configuration within the probe body of FIGURE 6 in accordance with this disclosure; and
FIGURE 8 illustrates another example of a gas path routing configuration within the probe body of FIGURE 6 in accordance with this disclosure.

### DETAILED DESCRIPTION

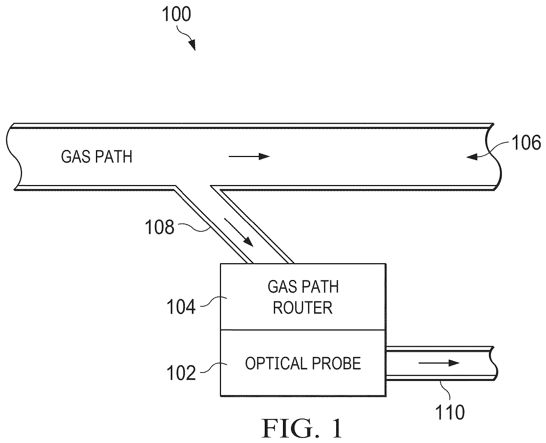

FIGURES 1 through 8, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

FIGURE 1 illustrates a general functional diagram 100 of an optical probe 102 having a gas path router 104 incorporated therein in accordance with this disclosure. The gas path router 104 receives a portion of the gas path 106 via an inlet 108 and routes the portion of the gas path 106 through the gas path router 104. The gas path router 104 directs the gas path received through the inlet 108 to clean or clear optics within the optical probe 102. After cleaning the optics of the optical probe, the gas path 106 passing through the gas path router 104 will than exit through an outlet 110.

The gas path router 104 enables the gas turbine engine gas path flow to be directed in a fashion that increases the velocity of the gas path flow over the optics of the optical probe 102 or through the optical path of the optical probe 102. This decreases the likelihood of debris contamination on the surfaces of the optics of the optical probe 102. Additionally, the redirected flow can be used to interrupt the direct impingement of the gas path 106 on the optical surfaces. This can enable the design of non-cooled optical probes without the need for purge.

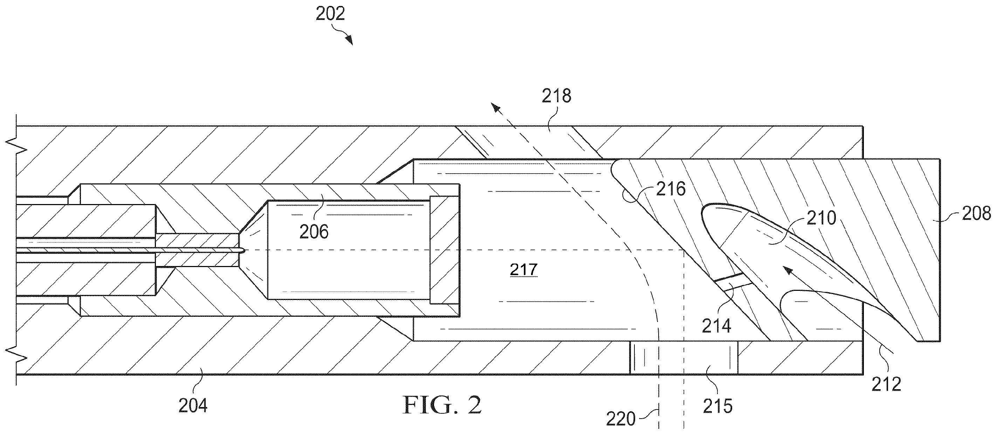

Referring now to FIGURE 2, there is illustrated a beam interrupt probe 202 in accordance with this disclosure. The beam interrupt probe 202 includes an outer housing 204 into which an optical sensor 206 and a mirror 208 are inserted. The mirror 208 includes a bore chamber 210 therein into which gas path air may be directed as shown generally at 212. The mirror 208 may overhang the probe housing 204 or the probe housing may be longer than the mirror. The gas path air 212 exits the bore chamber 210 through passageways 214 defined in the face 216 of the mirror 208. While the cross-sectional view of FIGURE 2 illustrates only a single passageway 214 as will be more fully described herein below, multiple passageways 214 on the face 216 of the mirror 208 provides a shield curtain to protect the face 216 of the mirror 208 from debris provided by the gas path passing through the housing 204.

The gas path travels through the housing 204 by entering through an entrance hole 215 defined in the housing through a chamber 217 within the housing and exiting through an exit hole 218 defined on the opposite side of the housing 204. The exit hole 218 is larger than the entrance hole 215. The exit hole 218 in the probe housing 204 allows for redirection of gas path flow away from the mirror face 216. The passageway of the gas path air into the entrance hole 215 and out of the exit hole 218 is shown generally by the arrow 220. The gas path airflow indicated by arrow 220 acts to clear debris from the optical sensor 206 and the air curtain provided out passageways 214 protects the face 216 of the mirror 208 from debris. In this fashion, the beam interrupt probe 202 has optics that are essentially self-cleaning responsive to the gas path flow therethrough.

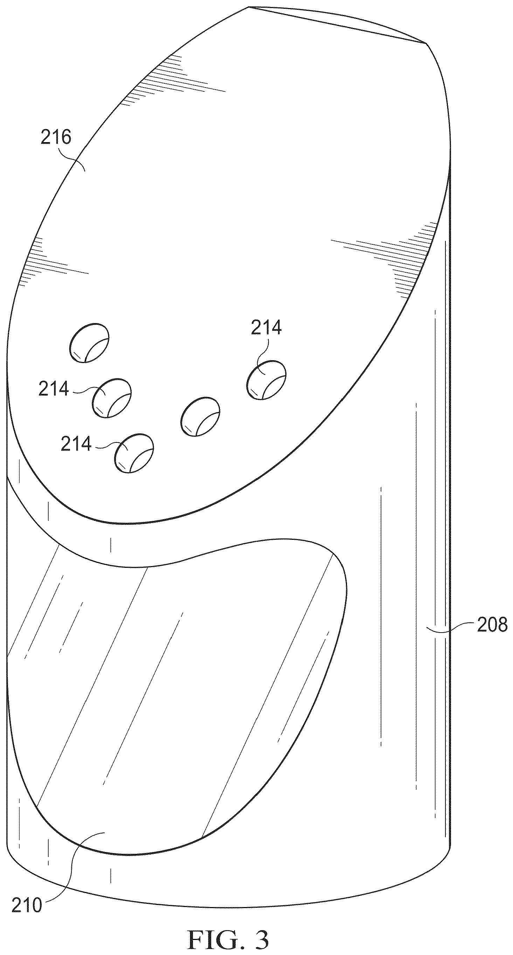

Referring now also to FIGURE 3, there is illustrated a perspective view of the mirror 208 in accordance with this disclosure. As can be seen, the face 216 of the mirror 208 includes multiple passageways 214 defined on the face interconnecting the face 216 of the mirror 208 with the internal bore chamber 210. Gas path air enters the bore chamber 210 and exits the mirror 208 through each of the passageways 214. Since the passageways 214 exiting the mirror 208 are much smaller than the opening into the bore chamber 210, the pressure increases while the velocity of the air out the passageways 214 decreases. At the same time, the gas path air is entering the entrance hole 215 and exiting the exit hole 218 defined within the housing 204. The entrance hole 215 is smaller than the exiting exit hole 218. This causes the gas path air velocity to increase and the pressure to decrease. The increased pressure within the chamber 210 and the decreased pressure within the chamber 217 causes the gas path air to flow out of the passageways 214 to provide the air curtain on the mirror face 216.

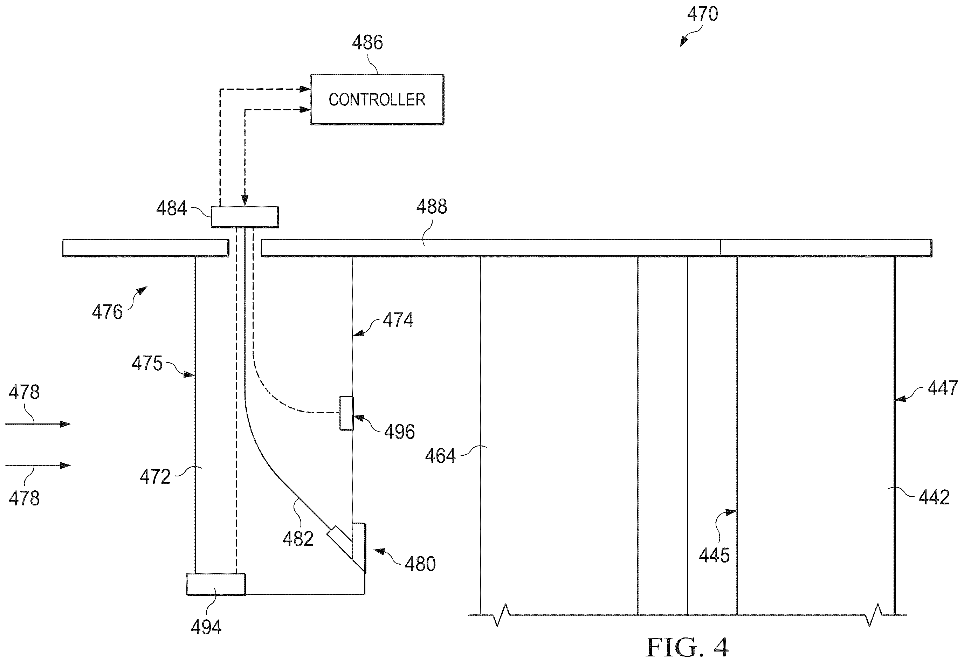

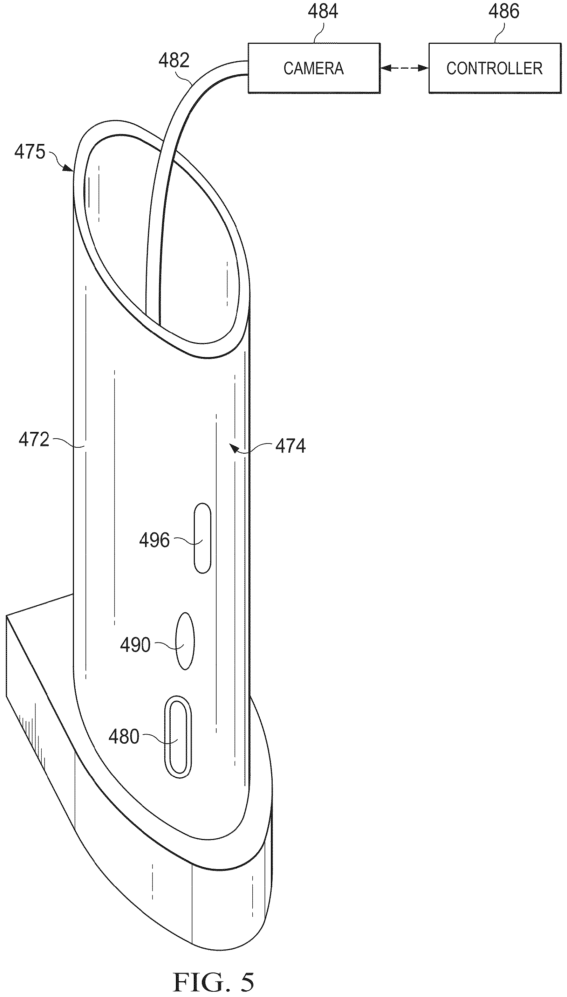

Referring to FIGURES 4 and 5, FIGURE 4 illustrates a schematic view of an example optical inspection system 470 in accordance with this disclosure and FIGURE 5 illustrates a perspective view of an example probe body 472 of FIGURE 4 in accordance with this disclosure. The example optical inspection system 470 includes a lens 480 disposed in a probe body 472. The probe body 472 extends into the inlet air flow path 478 from the fan case 488 of a gas turbine engine. The example probe body 472 includes a leading edge 475 and a trailing edge 474. A lens 480 is provided within the probe body 472 at or near the trailing edge 474 and directed toward the fan blades 442. Images may include the leading edge 445 and trailing edge 447 of each fan blade 442 along with portions of each side. Images are communicated from the lens 480 through an optical path to a camera 484. The camera 484 is located remote from the lens 480. In one disclosed example, the camera 484 is located outside of the probe body 472 and the fan case 488. The example optical path may be an optic fiber 482 or any other lens array or structure that communicates images to the camera 484. The camera 484 is mounted outside of the inlet air flow path 478. Mounting of the camera 484 outside of the inlet airflow path 478 provides a stable environment with smaller temperature and pressure fluctuations. Additionally, the camera 484 is not subject to damage from debris or foreign objects that may be present in the inlet airflow.

The camera 484 generates images that are communicated to a controller 486. The example controller 486 is programmed to use the images to assess a condition of the fan blades 442. In one example, the controller 486 is further programmed to assess a condition of the fan blades 442 based on images from the camera 484.

The example controller 486 includes a system, algorithm and software configured to determine the condition of the fan blades 442 based on predefined acceptance criteria. The example controller 486 is a device and system for performing necessary computing operations of the inspection system 470. The controller 486 may be specially constructed for operation of the inspection system 470, or it may comprise at least a general-purpose computer selectively activated or reconfigured by software instructions stored in a memory device. The controller 486 may further be part of full authority digital engine control (FADEC) or an electronic engine controller (EEC). In one example, the controller 86 stores image data relating to at least one of the fan blades 442 for review by aircraft mounted or off aircraft systems. The controller 486 may be configured to make determinations with regard to the structural integrity of each of the fan blades 442 and to communicate any determinations to an aircraft operator and/or maintenance technicians. The controller 86 may further be configured to store image data for processing and determination by an aircraft maintenance system separate from the aircraft.

The example probe body 472 may also be utilized to support other measurement and sensing devices. In one example, the probe body 472 includes a temperature sensor 494 that communicates information indictive of a temperature of the inlet airflow 478 to the controller 486. Although a temperature sensor 494 is disclosed by way of example, other sensing devices may also be utilized and supported within the probe body 472 and are within the contemplation and scope of this disclosure.

The disclosed example probe body 472 further includes a lighting device 496 to illuminate the fan blades 442 as necessary to obtain the desired images for analysis. The example lighting device 496 is illustrated as being disposed within the probe body 472. The lighting device 496 could be provided in other locations that would provide sufficient illumination to capture images of the fan blades 442.

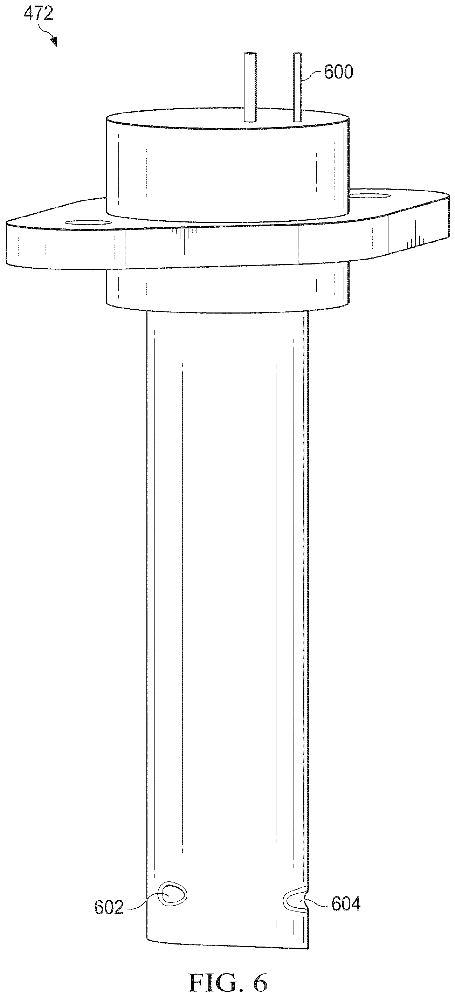

Referring now to FIGURE 6 there is illustrated another perspective view of the probe body 472 of FIGURES 4 and 5 in accordance with this disclosure. The probe body 472 receives the gas path airflow at an inlet opening 600 at some location thereon and the gas path airflow exits through exit openings 602 and 604.

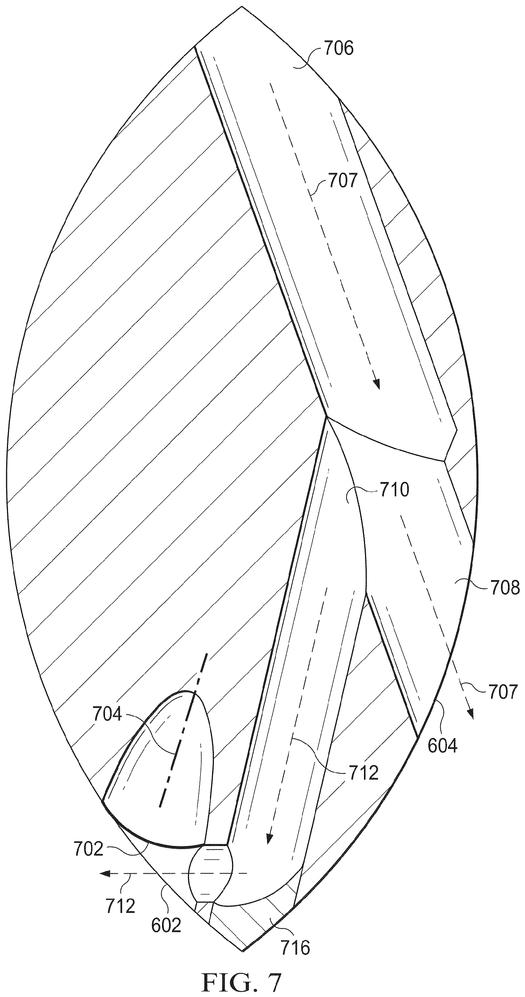

Referring now also to FIGURE 7, there is illustrated an exploded cross-sectional view of a one example of the internal portion of the probe body 472 of FIGURE 6 in accordance with this disclosure, for directing the gas path flow to clear a lens 702 for optical components connected to a fiber 704 different from that disclosed in FIGURE 4. The gas path passive purge system includes a series of three different bores to create straight passageways within the probe body 472. The first channel 706 enables the entry of the gas path airflow 707 from the inlet opening 600. A second channel 708 provides for the exit of the gas path airflow 707 through an output opening 604. Third channel 710 provides for a routing of the gas pass airflow 712 past the lens 702 through a second exit opening 602 define by a fourth channel intersecting the third channel 710. A plug 716 is inserted into the opening created by the third channel 710 so that the air flows out of exit opening 714. The gas path airflow 712 flowing out of the exit opening 714 flows past the lens 702 removing dust and debris therefrom. Since the gas path airflow 707 through the first channel 706 and the second channel 708 travels a substantially straight pathway, the air flowing out second channel 708 through gas path airflow 707 will be flowing faster than the gas path airflow 712 down third channel 710. The faster moving air within the gas path airflow 707 causes particulate matter within the airflow to be substantially maintained within the gas path airflow 707 rather than diverting down the third channel 710 via gas path airflow 712.

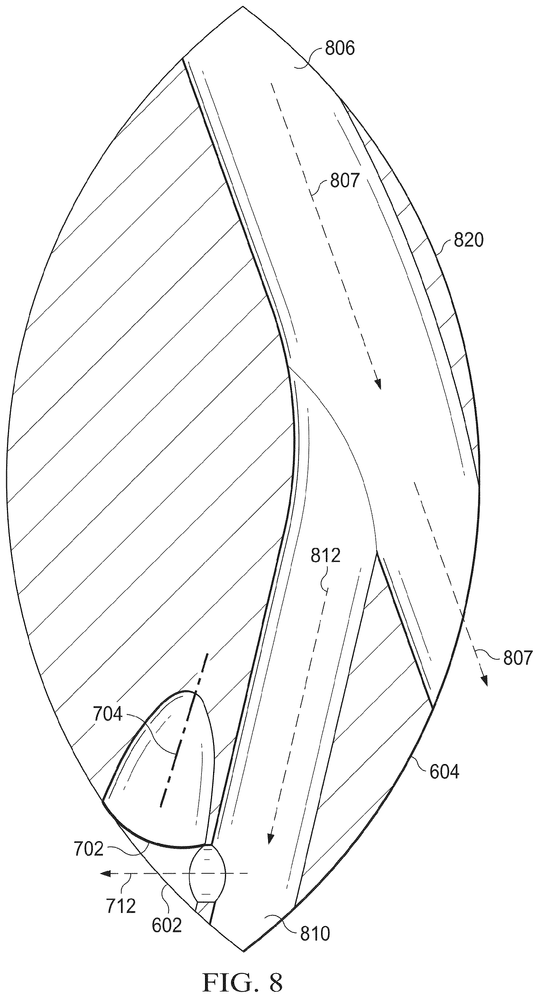

Referring now also to FIGURE 8, there is illustrated an exploded cross-sectional view of another example of the internal portion of the probe body 472 of FIGURE 6 in accordance with this disclosure, for directing the gas path flow to clear a lens 702 for optical components connected to a fiber 704. The gas path passive purge system includes curved pathways within the body of the probe. The first curved channel 806 enables the entry of the gas path airflow 807 from the inlet opening 600 and exit of the gas path flow out of an exit opening 604. A second curved channel 810 provides for a routing of the gas pass airflow 812 past the lens 702 through an exit opening 602. The gas path airflow 712 flowing out of the exit opening 602 flows past the lens 702 removing dust and debris therefrom. By having each of the first curved channel 806 and the second curved channel 810 being curved, particulate matter and debris within the gas path airflow 807 will be forced by centrifugal forces toward the outer wall 820 of the first curved channel 806 as air passes through the first curved channel. This limits the flow of particulate matter through the second curved channel 810 to prevent the deposition of particulate matter on the lens 702.

The above-described systems provide a number of overall benefits in the use of a gas path airflow to provide passive purging of the optics of optical probes. The configuration provides for simplified probe design for uncooled probes that would otherwise utilize a cooling design for the purge of material from the optics. The system decreases/eliminates the need for periodic cleaning of the optics. The system enables the possibility of using an unpurged probe design within an inaccessible area of the aircraft gas turbine engine. The system expands the design space for optical probe BOM applications since the probes can be self-cleaning. The designs will also decrease GN2 consumption.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. An apparatus, comprising:
an optical probe (102) having optical components (702) therein; and
a gas path router (104) for receiving an airflow from a gas path (106) of a gas turbine engine, wherein the gas path router (104) is configured to route the airflow from the gas path (106) past the optical components (702) of the optical probe (102).

2. The apparatus of Claim 1, wherein the optical probe (102) comprises a beam interrupt optical probe (102).

3. The apparatus of Claim 1 or 2, wherein the gas path router (104) further comprises:
a housing (204) of the optical probe (102), the housing defining a first substantially straight passageway (708) having a first end for receiving the airflow from the gas path (106) and a second end for discharging a first portion of the airflow, the housing (204) of the optical probe (102) further defining a second substantially straight passageway (710) having a first end connected to the first substantially straight passageway (708) for receiving a second portion of the airflow, the housing (204) of the optical probe (102) further defining an outlet passage (602) for routing the second portion of the airflow past the optical components (702) of the optical probe (102) to purge debris from the optical components (702).

4. The apparatus of Claim 1 or 2, wherein the gas path router (104) further comprises:
a housing (204) of the optical probe (102), the housing defining a first curved passageway (806) having a first end for receiving the airflow from the gas path (106) and a second end for discharging a first portion of the airflow, the housing (204) of the optical probe (102) further defining a second curved passageway (810) having a first end connected to the first curved passageway (806) for receiving a second portion of the airflow, the housing (204) of the optical probe (102) further defining an outlet passage (602) for routing the second portion of the airflow past the optical components (702) of the optical probe (102) to purge debris from the optical components (702).

5. The apparatus of any preceding Claim, wherein:
a or the housing (204) of the optical probe (102) defines a first opening (215) for receiving a or the first portion of the airflow from the gas path (106) and a second opening (218) for discharging the first portion of the airflow; and
the gas path router (104) further comprises a mirror (208) configured for insertion into the housing (204), the mirror (208) defining a face (216) for reflecting an optical signal toward an optical sensor (206) of the optical probe (102) such that when the mirror (208) is inserted into the housing (204) a chamber (217) is defined between the first opening (215) and the second opening (218) of the housing (204), the mirror (208) further defining a mirror chamber (210) therein for receiving a second portion of the airflow from the gas path (106), and the mirror (208) further defining a plurality of passageways (214) in the face (216) of the mirror (208) connecting the mirror chamber (210) to the chamber (217) between the first opening (215) and the second opening (218) within the housing (204) of the optical probe (102).

6. An apparatus comprising:
a beam interrupt optical probe (102) having optical components (702) therein;
a housing (204) surrounding the beam interrupt optical probe (102) defining a first opening (215) for receiving a first portion of airflow from a gas path (106) and a second opening (218) for discharging the first portion of the airflow; and
a mirror (208) configured for insertion into the housing (204), the mirror (208) defining a face (216) for reflecting an optical signal toward an optical sensor (206) of the beam interrupt optical probe (102) such that when the mirror (208) is inserted into the housing (204) a chamber (217) is defined between the first opening (215) and the second opening (218) of the housing (204), the mirror (208) further defining a mirror chamber (210) therein for receiving a second portion of the airflow from the gas path (106), and the mirror (208) further defining a plurality of passageways (214) in the face (216) of the mirror (208) connecting the mirror chamber (210) to the chamber (217) between the first opening (215) and the second opening (218) within the housing (204) of the beam interrupt optical probe (102).

7. The apparatus of Claim 5 or 6, wherein the plurality of passageways (214) in the face (216) of the mirror (208) are configured to provide an air curtain with air discharged therethrough to protect the face (216) of the mirror (208) from the first portion of the airflow within the housing (204).

8. The apparatus of Claim 5, 6 or 7, wherein the second opening is larger than the first opening.

9. The apparatus of any of Claims 5 to 8, wherein the mirror chamber (210) has an input opening larger than the plurality of passageways (214).

10. The apparatus of any of Claims 5 to 9, wherein the apparatus is configured to provide a pressure within the chamber (217) between the first opening and the second opening within the housing (204) when in use that is lower than a pressure provided within the mirror chamber (210) so as to cause the airflow to flow out of the plurality of passageways (214) in the face (216) of the mirror (208) and create an air curtain to protect the face (216) of the mirror (208).

11. An apparatus comprising:
an optical probe (102) having optical components (702) therein; and
a housing (204) surrounding the optical probe (102) defining a first passageway (708, 806) having a first end for receiving an airflow from a gas path (106) and a second end for discharging a first portion of the airflow, the housing (204) of the optical probe (102) further defining a second passageway (710, 810) having a first end connected to the first passageway for receiving a second portion of the airflow, the housing (204) of the optical probe (102) further defining an outlet passage (602) for routing the second portion of the airflow past the optical component (702) of the optical probe (102) to purge debris from the optical component (702).

12. The apparatus of Claim 11, wherein the first passageway comprises a first substantially straight passageway (708) and the second passageway comprises a second substantially straight passageway (710).

13. The apparatus of Claim 3 or 12, wherein the first passageway (708) and the second passageway are configured (710) such that the first portion of the airflow is greater than the second portion of the airflow such that the debris within the airflow remains substantially within the first substantially straight passageway (708) when flowing past the second substantially straight passageway (710).

14. The apparatus of Claim 11, wherein the first passageway comprises a first curved passageway (806) and the second passageway comprises a second curved passageway (810).

15. The apparatus of Claim 4 or 14, wherein the first curved passageway (806) is configured such that movement of the airflow through the first curved passageway (806) creates centrifugal forces on the debris within the airflow to move the debris towards an outer edge of the airflow such that substantially all of the debris remains within the second portion of the airflow.
